(19) **Europäisches Patentamt**
**European Patent Office**
**Office européen des brevets**

(11) **EP 4 179 021 B1**

(12) **EUROPEAN PATENT SPECIFICATION**

(45) Date of publication and mention
of the grant of the patent:
**25.12.2024 Bulletin 2024/52**

(21) Application number: **21740501.8**

(22) Date of filing: **07.07.2021**

(51) International Patent Classification (IPC):
**C08L 23/08** (2006.01)     **F16L 9/12** (2006.01)

(52) Cooperative Patent Classification (CPC):
(C-Sets available)
**C08L 23/0815;** C08L 2203/18; C08L 2205/025;
C08L 2314/02; F16L 9/12            (Cont.)

(86) International application number:
**PCT/EP2021/068869**

(87) International publication number:
**WO 2022/008608 (13.01.2022 Gazette 2022/02)**

(54) **POLYOLEFIN COMPOSITION WITH IMPROVED RESISTANCE TO HIGH TEMPERATURE**

POLYOLEFINZUSAMMENSETZUNG MIT VERBESSERTER
HOCHTEMPERATURBESTÄNDIGKEIT

COMPOSITION POLYOLÉFINE À RÉSISTANCE AMÉLIORÉE AUX TEMPÉRATURES ÉLEVÉES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.07.2020 EP 20185201**

(43) Date of publication of application:
**17.05.2023 Bulletin 2023/20**

(73) Proprietor: **Borealis AG**
**1020 Vienna (AT)**

(72) Inventors:
• **BURYAK, Andrey**
**4021 Linz (AT)**
• **SUMERIN, Victor**
**06850 Kulloo (FI)**

• **HARTL, Anna Maria**
**4021 Linz (AT)**

(74) Representative: **Kador & Partner Part mbB**
**Corneliusstraße 15**
**80469 München (DE)**

(56) References cited:
**EP-A1- 1 909 013       EP-A1- 2 583 998**
**EP-A1- 2 860 200       WO-A1-2019/197163**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 23/0815, C08L 23/06**

**Description**

The present invention relates to a polyethylene composition comprising a base resin, a polyethylene composition obtainable by a multistage process, an article comprising a polyethylene composition, a pipe and use of a polyethylene composition comprising a base resin for the production of a pipe or a fitting.

Polyolefin pipes and especially polyethylene pipes are conventionally used for transport of water, gas as well as industrial liquids and slurries. Due to their versatility, ease of production and installation as well as non-corrosivity, their use is constantly increasing.

The transported fluids may have varying temperatures, usually within the temperature range from about 0°C to about 50°C.

According to ISO 9080 polyethylene pipes are classified by their minimum required strength, i.e. their capability to withstand different hoop stresses during 50 years at 20 °C without fracturing. Thereby, pipes withstanding a hoop stress of 8.0 MPa ($MRS_{8.0}$) are classified as PE80 pipes, and pipes withstanding a hoop stress of 10.0 MPa ($MRS_{10.0}$) are classified as PE100 pipes. The service temperature for PE100 is usually within the temperature range from about 0 °C to about 50 °C.

To meet the PE80 requirements with multimodal resins manufactured by conventional Ziegler-Natta catalysts, the density needs to be at least 940 kg/m$^3$ and to meet PE100 requirements the density needs to be above 945 kg/m$^3$. However, the density of a polyethylene resin is directly connected with its crystallinity. The higher the crystallinity of a polyethylene resin the lower its slow crack growth resistance. In other words, all polyethylene materials for pressure resistance of a pipe suffer from the dependency of crystallinity and insofar density and the slow crack growth. When the density is increased, the resistance to slow crack growth (SCG) decreases. Further, there are numerous applications which require higher pipe lifetime at increased temperature. This is particularly true for countries where the soil temperature is above 20 °C. For these countries a PE100 grade with higher service temperature is needed as otherwise the wall thickness of respective pipes would have to be increased leading to higher material use and costs.

The manufacture of polyethylene materials to be used in pressure pipes is discussed for example in an article by Scheirs et al (Scheirs, Bohm, Boot and Leevers: PE100 Resins for Pipe Applications, TRIP Vol. 4, No 12 (1996) pp. 408-415).

WO 00/22040 discloses a pipe having good mechanical properties made from a bimodal resin. EP 1 985 660 A1 discloses a pipe or a supplementary pipe article with improved slow crack growth resistance comprising a polyethylene composition comprising a base resin, which comprises a first ethylene homo- or copolymer fraction (A), and a second ethylene homo- or copolymer fraction (B), wherein fraction (A) has a lower average molecular weight than fraction (B), and wherein the base resin has a density in the range of 945 to 949 kg/m$^3$, an $MFR_5$ in the range of 0.2 to 0.4 g/10 min, a comonomer content of higher than 2.0 wt.-% and a $SHI_{(2.7/210)}$ in the range of 55 to 100. EP 1 655 337 A1 discloses a polyethylene composition with improved homogeneity comprising a base resin which comprises (A) a first ethylene homo- or copolymer fraction, and (B) a second ethylene homo- or copolymer fraction, wherein fraction (A) has a lower molecular weight than fraction (B), the ratio of the $MFR_2$ of fraction (A) and the $MFR_5$ of the base resin being at least 50 and the composition has a white spot area of 1 % or below. EP 1 146 079 discloses compositions having a powder density of at least 953 kg/m$^3$ and a final density of the composition in the range of 955 to 965 kg/m$^3$, a $MFR_5$ of 0.15 to 0.40 g/10min. A pressure pipe according to EP 1 146 079 has an MRS rating of at least $MRS_{11.2}$ (PE112). The compositions are composed of two components, whereby the low molecular weight component is an ethylene homopolymer having a $MFR_2$ of 350 to 1500 g/10min and is present in an amount of 42 to 55 wt.-%. EP 2 583 998 A1 disclose polyethylene compositions with high rapid crack propagation resistance and pressure resistance.

When a pipe is used at higher temperatures, a derating factor according to ISO 13761 needs to be applied to account for the higher service temperature compared to the lifetime prediction temperature of 20°C. For example, at 35°C a pressure reduction factor of 0.79 needs to be applied. This results in thicker pipes and consequently increased material use which increases the pipe costs.

Additionally, pipes made of polyolefin compositions in particular polyethylene compositions show at high temperatures premature failures due to slow crack growth.

Therefore, there is still the need for polyethylene compositions, with improved pressure resistance. Besides, advantageous resistance at high temperatures such as resistance to slow crack growth is needed. Further properties which are desirable to improve are processability, tensile modulus, short term pressure resistance and sagging resistance of a pipe material.

It is the object underlying the present invention to provide polyethylene compositions with improved pressure resistance. Besides, polyethylene compositions with advantageous temperature resistance should be provided and a good combination of stress at yield and strain hardening modulus should be provided. In addition, it is the object to improve impact properties, especially rapid crack propagation resistance, while properties such as slow crack growth resistance, processability, tensile modulus, short term pressure resistance and sagging resistance are maintained at a high level.

The present invention is based on the surprising finding that such a pipe material can be provided by selecting a specific combination of properties of a multimodal polyethylene base resin in terms of a selected melt flow rate of the low molecular weight (LMW) fraction, a selected comonomer content in the high molecular weight (HMW) fraction, and a selected amount of the high Mw fraction.

The present invention therefore provides a polyethylene composition comprising a base resin which comprises, or consists of,

(A) a first ethylene homo- or copolymer fraction having a melt flow rate $MFR_2$ from 1 to 150 g/10 min, preferably from 5 to 100 g/10 min, more preferably from 7.5 to 75 g/10min and even more preferably from 10 to 50 g/10min, and

(B) a second ethylene copolymer fraction having a content of units derived from the comonomer of from 0.30 to 1.00 mol%, preferably of from 0.40 to 0.85 mol% and more preferably of from 0.45 to 0.70 mol%,

wherein fraction (A) has a lower molecular weight than fraction (B) and wherein fraction (B) is present in an amount of from 45 to 70 wt%, preferably from 47 to 67 wt%, more preferably from 49 to 65 wt%, even more preferably from 50 to 62 wt.% based on the total weight of the base resin;

wherein the polyethylene composition has a melt flow rate $MFR_5$ from 0.10 to 0.35 g/10min, preferably from 0.10 to 0.25 g/10min; and

wherein the polyethylene composition has a strain hardening modulus from 50 to 150 MPa.

It has been surprisingly found that a superior resistance at high temperatures can be achieved if the $MFR_5$ of the polyethylene composition is in a specific range and if the melt flow rate of the low molecular weight (LMW) component of the polyethylene composition (fraction (A)) is reduced to certain limits and the high molecular weight (HMW) component of the polyethylene composition (fraction (B)) contains a specific amount of comonomer. In addition to that, the ratio of the low molecular weight (LMW) component of the polyethylene composition (fraction (A)) and the high molecular weight (HMW) component of the polyethylene composition (fraction (B)) influences the processability and the balance of properties positively. Surprisingly the polyethylene composition of the present invention has improved properties and in particular an improved balance of properties such as an advantageous combination of stress at yield and strain hardening modulus and good processability even without polymer processing aids. The polyethylene compositions of the present invention allow the production of thinner pipes.

The polyethylene composition according to the present invention is obtainable by a multistage process, the multistage process comprising, or consisting of, the steps of

a) polymerizing ethylene in the presence of

- a catalyst,

- in one or more loop reactor(s), preferably in one or two loop reactor(s), in the presence of an alkyl aluminium compound and a chain transfer agent for obtaining fraction (A), the fraction (A) having a melt flow rate $MFR_2$ from 1 to 150 g/10 min, preferably from 5 to 100 g/10 min, more preferably 7.5 to 75 g/10min and even more preferably 10 to 50 g/10min; and

b) transferring fraction (A) to a gas phase reactor

- feeding ethylene and comonomer to the gas phase reactor,

- further polymerizing to obtain a base resin comprising fraction (A) obtained in step a) and fraction (B) obtained in step b),

wherein fraction (B) has a content of units derived from the comonomer of 0.30 to 1.00 mol% and wherein fraction (B) is present in an amount of from 45 to 70 wt%, preferably from 47 to 67 wt%, more preferably from 49 to 65 wt%, even more preferably from 50 to 62 wt% based on the total weight of the base resin;

c) extruding the base resin into a polyethylene composition having a melt flow rate $MFR_5$ from 0.10 to 0.35 g/10min, preferably from 0.10 to 0.25 g/10min; wherein the polyethylene composition has a strain hardening modulus from 50 to 150 MPa.

**EP 4 179 021 B1**

The above objects can further be achieved by an article, preferably a pipe or a fitting, more preferably a pipe comprising, or consisting of, above polyethylene composition.

Furthermore, above objects can be achieved by the use of the above polyethylene composition for producing a pipe or a fitting, and by the use of the above polyethylene composition for improving the resistance to higher temperature of a pipe or a fitting.

A polyethylene composition according to the present invention denotes a polymer derived from at least 50 mol% ethylene monomer units and additional comonomer units.

The expression 'ethylene homopolymer' according to the present invention relates to an ethylene polymer that consists substantially, i.e. to least 99% by weight, more preferably at least 99.5% by weight, still more preferably at least 99.8% by weight of ethylene and most preferably is an ethylene polymer which only includes ethylene monomer units.

The term 'base resin' means the entirety of polymeric components in the polyethylene composition according to the invention, i.e. it denotes the polymeric part of the composition without fillers such as carbon black. The base resin usually is making up at least 90 wt% of the total composition. Preferably, the base resin is consisting of polymer fractions (A) and (B), optionally further comprising a prepolymer fraction in an amount of up to 10 wt%, more preferably up to 7 wt%, and most preferably up to 5 wt% of the total base resin. A person skilled in the art will understand that measurements as to properties of the base resin require the presence of stabilizers.

All rheological measurements can be performed with the base resin and with the composition. As a matter of definition, all rheological properties shall preferably also apply to the composition.

The term 'catalyst system' shall denote the composition formed by the catalyst and the cocatalyst.

The melt flow rate (MFR) is an important property of the multimodal polyethylene for pipes according to the invention. The MFR is determined according to ISO 1133 and is indicated in g/10 min. The MFR is an indication of the flowability and, hence, the processability of the polymer. The higher the melt flow rate, the lower the viscosity of the polymer. The MFR is determined at different loadings such as 2.16 kg ($MFR_2$; ISO 1133, condition D), 5 kg ($MFR_5$; ISO 1133, condition T) or 21.6 kg ($MFR_{21}$; ISO 1133, condition G).

The polyethylene composition according to the present invention preferably has a $MFR_{21}$ from 2 to 10 g/10 min, preferably from 3 to 7 g/10 min, and even more preferably from 3 to 5 g/10 min.

According to another preferred embodiment, the base resin of the polyethylene composition of the present invention has a polydispersity index (PI) of from 1.2 to 3.0 $Pa^{-1}$, preferably from 1.3 to 2.8 $Pa^{-1}$, and more preferably from 1.5 to 2.5 $Pa^{-1}$.

It is further important to ensure that the polymer composition, for example, after being extruded into a pipe and before being cooled, does not flow by gravity from the upper part of the pipe to a lower part and therefore create a non-uniform distribution of polymer around the cross-section of the pipe. This phenomenon is called tendency of a polymer to display gravity flow or 'sagging'. The sagging resistance is the property of a polymer pipe to withstand this tendency. Sagging resistance may be determined by a rheological or a melt index method.

The determination is done in the present invention by a method which correlates well with the above mentioned melt index method, and relates to the rheology of the polymer. The method is based on determination of the viscosity of the polymer at a very low, constant shear stress of 747 Pa ($eta_{747}$). The viscosity of the polymer at this shear stress is determined at a temperature of 190 °C and has been found to be inversely proportional to the gravity flow of the polymer, i.e. the greater the viscosity the lower the gravity flow. According to the present invention the polyethylene composition preferably exhibits a viscosity at $eta_{747}$ of at least 200 kPa*s, preferably at least 250 kPa*s, even more preferably at least 300 kPa*s.

Usually, the base resin of the polyethylene composition of the present invention has a viscosity at a shear stress of 747 Pa ($eta_{747}$) from 200 to 800 kPa*s, preferably 250 to 780 kPa*s and more preferably 300 to 770 kPa*s.

In a preferred embodiment the base resin has a molecular weight distribution, being the ratio of Mw/Mn, from 10 to 25, preferably from 12 to 23, more preferably from 14 to 22; and/or the base resin has a polydispersity index (PI) from 1.2 to 3.0 $Pa^{-1}$, preferably from 1.3 to 2.8 $Pa^{-1}$, more preferably from 1.5 to 2.5 $Pa^{-1}$; and/or the base resin has a viscosity at a shear stress of 747 Pa ($eta_{747}$) from 200 to 800 kPa*s, preferably 250 to 780 kPa*s and more preferably 300 to 770 kPa*s.

It is preferred that fraction (B) which constitutes the high molecular weight (HMW) component of the polyethylene composition is a copolymer of ethylene and at least one alpha-olefin comonomer. The alpha-olefin comonomer preferably is selected from alpha-olefin comonomers with 3 to 12 carbon atoms, more preferably 4 to 8 carbon atoms. Suitable alpha-olefin comonomer species are 1-butene, 1-hexene and 1-octene. Thereby, 1-butene and 1-hexene are especially preferred and 1-hexene is even more preferred.

According to a preferred embodiment the present invention is concerned with a polyethylene composition, wherein in fraction (B) the units derived from a comonomer are units derived from at least one alpha-olefin comonomer, preferably 1-hexene and/or 1-butene and more preferably 1-hexene; and/or wherein the base resin has a content of units derived from the comonomer of not more than 0.6 mol%, preferably not more than 0.5 mol% based on the base resin.

In a preferred embodiment fraction (B) has a content of units derived from the comonomer of not more than 0.8 mol%, preferably not more than 0.7 mol% based on the total amount of fraction (B).

The polyethylene composition of the invention has a very good impact strength which can be measured in the Charpy Impact Strength test as described in detail below at different temperatures.

Accordingly, the polyethylene composition preferably has a Charpy Impact Strength (CIS) at 23 °C of higher than 35 kJ/m$^2$, and/or a Charpy Impact Strength (CIS) at 0 °C of higher than 25 kJ/m$^2$, and/or a Charpy Impact Strength (CIS) at -20 °C of higher than 15 kJ/m$^2$.

Fraction (A) of the base resin may be an ethylene homo- or copolymer.

If fraction (A) is an ethylene copolymer, it is preferably a copolymer of ethylene with an alpha-olefin having from 3 to 8 carbon atoms, more preferably 4 to 6 carbon atoms, and most preferably is 1-butene or 1-hexene. Preferably, the amount of comonomer, if present, in fraction (A) is 1 mol% or smaller, e.g. from 0.1 to 0.5 mol%.

However, preferably fraction (A) of the base resin is an ethylene homopolymer.

Fraction (A) preferably has a density of 960 to 980 kg/m$^3$.

Fraction (A) and/or fraction (B) may consist of a single polymer fraction made in one reactor, or may consist of two or more partial fractions made in separate reactors.

It is preferred that fraction (A) and/or fraction (B) consist of two partial fractions or a single fraction.

Most preferably, fraction (A) consists of one single fraction or two partial fractions, preferably produced in one or two loop reactors, respectively, and fraction (B) consists of one single fraction, preferably produced in a gas phase reactor.

The base resin of the polyethylene composition of the present invention comprises fractions (A) and (B) which differ (at least) in their molecular weight. Such resins are designated to be multimodal polyethylenes. The prefix "multi" relates to the number of different polymer fractions the base resin is consisting of. Thus, for example, a base resin consisting of two different fractions only is called "bimodal".

The form of the molecular weight distribution curve, i.e. the appearance of the graph of the polymer weight fraction as function of its molecular weight, of such a multimodal polyethylene will show two or more maxima or at least be distinctly broadened in comparison with the curves for the individual fractions.

For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima.

It is preferred in the present invention that the base resin is a bimodal polyethylene base resin, i.e. the base resin preferably consists of fractions (A) and (B) and, optionally, a small amount of a prepolymer which is considered part of the polymer fraction produced in the first reactor.

If one or more fractions of the base resin consist of partial fractions produced in separate reactors, it is preferred that the reaction conditions are chosen so that essentially the same polymer is produced therein. This means that if, for example and preferably, the base resin consists of fractions (A) and (B) and fraction (A) is produced as two partial fractions in two separate loop reactors under conditions so that essentially the same or the same polymer is produced therein, the base resin will still be a bimodal resin as it consists of two fractions of different polymers.

Another characterizing feature of the present invention is the density of the polyethylene base resin. For reasons of strength the density lies in the medium to high density range, more particularly in the range of 930 to 965 kg/m$^3$. Preferably, densities of 935 to 960 kg/m$^3$ are used. Preferably the density is not higher than 965 kg/m$^3$. It is possible to obtain pressure pipes of a higher design stress rating with high density multimodal polyethylene than with medium density multimodal polyethylene.

According to a preferred embodiment the present invention is concerned with a polyethylene composition, wherein the base resin has a density in the range of 940 to 957 kg/m$^3$, preferably in the range of 942 to 955 kg/m$^3$ and more preferably in the range of 945 to 953 kg/m$^3$.

The polyethylene composition preferably comprises at least 0.1 mol%, more preferably at least 0.2 mol% of at least one alpha-olefin comonomer. The amount of comonomer is preferably at most 0.6 mol%, more preferably at most 0.5 mol%, and still more preferably at most 0.4 mol%, determined by quantitative molten state nuclear-magnetic resonance (NMR) spectroscopy. Preferably the comonomer is 1-hexene.

In a preferred embodiment of the present invention the polyethylene composition has a strain hardening modulus from 55 to 100 MPa and preferably 60 to 90 MPa; and/or the polyethylene composition has a stress at yield at 80°C from 6.5 to 7.5 MPa, preferably from 6.6 to 7.4 MPa and more preferably from 6.7 to 7.2 MPa; and/or the polyethylene composition has a tensile modulus from 950 to 1250 MPa and preferably from 1000 to 1200 MPa.

The polyethylene composition according to the invention has a very good resistance to rapid crack propagation. Accordingly, the composition preferably has a critical temperature, Tc, in the rapid crack propagation (S4 test) of -15 °C or lower, preferably of -17°C or lower and more preferably of -20°C or lower.

Furthermore, the polyethylene composition preferably has a time to failure in the notched pipe test (NPT) of at least 500 h, more preferably at least 600 h.

Preferably the polyethylene composition satisfies the following inequation:

$$\text{Stress at yield at } 80°C > 9.58 - 0.92*\log (NPT).$$

This demonstrates the advantageous balance between stress at yield and notched pipe test results of the polyethylene composition.

According to a preferred embodiment the polyolefin composition has a failure time in the short term pressure resistance (STPR) test at a stress level of 5.9 MPa at 80°C of at least 700h and preferably of at least 800h.

According to another preferred embodiment the polyolefin composition has a failure time in the short term pressure resistance (STPR) test at a stress level of 6.2 MPa at 80°C of at least 70h and preferably of at least 80h.

In addition to the base resin, usual additives for utilization with polyolefins, such as pigments, stabilizers (antioxidant agents), antiacids and/or anti-UVs, antistatic agents and utilization agents (such as processing aid agents) may be present in the polyethylene composition. Preferably, the amount of these additives is 10 wt% or lower, further preferred 8 wt% or lower, still more preferred 4 wt% or lower of the total composition.

The composition may comprise carbon black in an amount of 8 wt% or lower, further preferred of 1 to 4 wt %, of the total composition.

Preferably, the base resin makes up at least 90 wt%, more preferably at least 92 wt%, and still more preferably at least 95 wt% of the polyethylene composition.

Furthermore, it is preferred that the polyethylene composition consists of the base resin, carbon black and further (usual) additives in any one of the amounts as herein described.

According to a preferred embodiment, the LMW fraction (fraction A) is an ethylene homopolymer and the HMW fraction (fraction (B)) is an ethylene copolymer. Preferably, the HMW fraction (fraction (B)) is a copolymer of ethylene with at least one further alpha-olefin comonomer selected from 1-propene, 1-butene, 1-pentene, 1-hexene and 1-octene.

In the present invention the proportions of the LMWfraction (fraction (A)) and HMW fraction (fraction (B)) (also known as the 'split' between the fractions) are selected properly. Fraction (A) may also contain a fraction obtained in prepolymerization. More particularly, the weight ratio of the LMW fraction to the HMW fraction should lie in the range of (30-55):(70-45), and preferably (33-53):(67-47), more preferably (35-51):(65-49) and even more preferably (38-50):(62-50). If the split lies within these ranges, the proportion of the HMW fraction results in high strength values such as pressure resistance in particular at high temperatures and slow crack growth as well as a low amount of gels and good processability.

The molecular weight distribution, as defined by the ratio of the weight average molecular weight (Mw) to the number average molecular weight (Mn), i.e. Mw/Mn, of the multimodal polyethylene may range from rather narrow to rather broad values and preferably lies in the range of from 10 to 25, preferably from 12 to 23, even more preferably from 14 to 22. The reason for this is to obtain a pressure pipe with a desired combination of good processability and good strength. Further, the number average molecular weight, Mn, lies in the range of from 9.000 to 20.000 g/mol, preferably from 10.000 to 18.000 g/mol, while the weight average molecular weight, Mw, lies in the range of from 200.000 to 320.000 g/mol, preferably of from 220.000 to 300.000 g/mol.

Preferably the base resin has an average molecular weight, Mn, in the range of from 9.000 to 20.000 g/mol, preferably from 10.000 to 18.000 g/mol.

In another preferred embodiment the present invention is concerned with a polyethylene composition, wherein the base resin has been produced in a multistage process.

A multi-stage process is a process which makes use of at least two reactors, one for producing a lower molecular weight component and a second for producing a higher molecular weight component. These reactors may be employed in parallel, in which case the components must be mixed after production. More commonly, the reactors are employed in series, such that the products of one reactor are used as the starting material in the next reactor, e.g. one component is formed in the first reactor and the second is formed in the second reactor in the presence of the first component. In this way, the two components are more intimately mixed, since one is formed in the presence of the other.

The polymerization reactions used in each stage may involve conventional ethylene homopolymerization or copolymerization reactions, e.g. gas phase, slurry phase, liquid phase polymerizations, using conventional reactors, e.g. loop reactors, gas phase reactors, batch reactors, etc.

The polymerization may be carried out continuously or batchwise, preferably the polymerization is carried out continuously.

Known two-stage processes are for instance liquid phase-liquid phase processes, gas phase-gas phase processes and liquid phase-gas phase processes. It is also known that these two-stage processes can further be combined with one or more additional polymerization steps selected from gas phase, slurry phase or liquid phase polymerization processes.

In the preferred multi-stage process, the lower molecular weight and higher molecular weight polymers, fractions (A) and (B), are produced in different polymerization steps, in any order.

The LMW polymer (fraction (A)) can be prepared in the first polymerization step and the HMW copolymer (fraction B) in the second polymerization step. This can be referred to as the normal mode and is preferred.

The HMW copolymer fraction (B) may also be prepared in the first polymerization step and the LMW polymer fraction (A) in the second polymerization step. This can be referred to as the reverse mode.

If the LMW fraction is produced in the first polymerization step, the melt flow rate of the first ethylene fraction (A) can be directly measured as described herein. If the LMW fraction is produced in the second polymerization step, the melt flow rate of the LMW ethylene fraction (A) can be calculated on the basis of the weight ratios of the LMW fraction and the HMW fraction and the molecular weight of the total polyethylene composition.

In addition, subtracting GPC curves, when fractions of each polymer are known is also possible for determining melt flow rate of the polymer produced in the second stage of a multi-stage polymerization process.

A two-stage process can, for example be a slurry-slurry or a gas phase-gas phase process, particularly preferably a slurry-gas phase process. Optionally the process according to the invention can comprise one or two additional polymerization steps.

These optional one or two additional polymerization steps preferably comprise slurry polymerization steps.

The slurry and gas phase stages may be carried out using any conventional reactors known in the art. A slurry phase polymerization may, for example, be carried out in a continuously stirred tank reactor; a batch-wise operating stirred tank reactor or a loop reactor. Preferably slurry phase polymerization is carried out in a loop reactor. In such reactors the slurry is circulated with a high velocity along a closed pipe by using a circulation pump. Loop reactors are generally known in the art and examples are given, for instance, in US 4,582,816 A, US 3,405,109 A, US 3,324,093 A, EP 479 186 A and US 5,391,654 A.

The term gas phase reactor encompasses any mechanically mixed, fluidized bed reactor, fast fluidized bed reactor or settled bed reactor or gas phase reactors having two separate zones, for instance one fluidized bed combined with one settled bed zone. Preferably the gas phase reactor for the second polymerization step is a fluidized bed reactor.

In a preferred embodiment of the invention the LMW fraction is produced first and the HMW fraction is produced in the presence of LMW fraction. In this case the LMW fraction is the first polyethylene fraction (A) and the HMW fraction is the second polyethylene fraction (B).

The resulting end product consists of an intimate mixture of the polymer fractions from the reactors, the different molecular-weight-distribution curves of these polymers together forming a molecular-weight-distribution curve having a broad maximum or several maxima, i.e. the end product is a multimodal polymer mixture.

It is preferred that the multimodal base resin of the polyethylene composition according to the invention is a bimodal polyethylene mixture consisting of polymer fractions (A) and (B), optionally further comprising a small prepolymerization fraction. It is also preferred that this bimodal polymer mixture has been produced by polymerization as described above under different polymerization conditions in two or more polymerization reactors connected in series. Owing to the flexibility with respect to reaction conditions thus obtained, it is most preferred that the polymerization is carried out in a loop reactor/a gas-phase reactor combination.

According to a preferred embodiment of the invention, the process comprises a slurry-phase polymerization stage and a gas-phase polymerization stage. One suitable reactor configuration comprises one to two slurry reactors, preferably loop reactors, and one gas-phase reactor. Such polymerization configuration is described e.g. in patent literature, such as in WO 92/12182 A1, WO 96/18662 A1 and WO 2010054732 of Borealis and known as Borstar technology.

The catalyst may be transferred into the polymerization zone by any means known in the art. It is thus possible to suspend the catalyst in a diluent and maintain it as homogeneous slurry. Especially preferred it is to use oil having a viscosity from 20 to 1500 mPa*s as diluent, as disclosed in WO 2006/063771 A1. It is also possible to mix the catalyst with a viscous mixture of grease and oil and feed the resultant paste into the polymerization zone. Further still, it is possible to let the catalyst settle and introduce portions of thus obtained catalyst mud into the polymerization zone in a manner disclosed, for instance, in EP 428054 A1.

The polymerization in slurry usually takes place in an inert diluent, typically a hydrocarbon diluent such as methane, ethane, propane, n-butane, isobutane, pentanes, hexanes, heptanes, octanes etc., or their mixtures. Preferably, the diluent is a low-boiling hydrocarbon having from 1 to 4 carbon atoms or a mixture of such hydrocarbons. An especially preferred diluent is propane, possibly containing minor amount of methane, ethane and/or butane.

The temperature in the slurry polymerization is typically from 40 to 115 °C, preferably from 60 to 110 °C and in particular from 70 to 100 °C. The pressure is from 1 to 150 bar, preferably from 10 to 100 bar.

The slurry polymerization may be conducted in any known reactor used for slurry polymerization. Such reactors include a continuous stirred tank reactor and a loop reactor. It is especially preferred to conduct the polymerization in loop reactor. Hydrogen is fed, optionally, into the reactor to control the molecular weight of the polymer as known in the art.

Furthermore, one or more $\alpha$-olefin comonomers may be added into the reactor to control the density and morphology of the polymer product. The actual amount of such hydrogen and comonomer feeds depends on the desired melt index (or molecular weight) and density (or comonomer content) of the resulting polymer.

The polymerization in gas-phase may be conducted in a fluidized bed reactor, in a fast-fluidized bed reactor or in a settled bed reactor or in any combination of these.

Typically, the fluidized bed or settled bed polymerization reactor is operated at a temperature within the range of from 50 to 100 °C, preferably from 65 to 90 °C. The pressure is suitably from 10 to 40 bar, preferably from 15 to 30 bar.

In addition, antistatic agent(s) may be introduced into the slurry and/or gas-phase reactor if needed.

The process may further comprise pre- and post-reactors.

The polymerization steps may be preceded by a prepolymerization step. The prepolymerization step may be conducted in slurry or in gas phase. Preferably, prepolymerization is conducted in slurry, and especially in a loop reactor. The temperature in the prepolymerization step is typically from 0 to 90 °C, preferably from 20 to 80 °C and more preferably from 30 to 70 °C.

The pressure is not critical and is typically from 1 to 150 bar, preferably from 10 to 100 bar.

The polymerization may be carried out continuously or batchwise, preferably the polymerization is carried out continuously.

In a first example of the present process, polymerizing olefins is accomplished in a multistage polymerization process comprising at least one gas-phase reactor for producing ethylene (co)polymers.

In a second example of the present process, polymerizing ethylene with comonomers as herein discussed is accomplished in a multi-stage polymerization process comprising at least one slurry reactor, such as one or two slurry reactors, preferably two slurry reactors, and one gas-phase reactor.

A chain-transfer agent, preferably hydrogen, is added as required to the reactors, and preferably 100 to 500 moles of H2/kmoles of ethylene are added to the reactor, when the LMW fraction is produced in this reactor, and 0 to 70 moles of H2/kmoles of ethylene are added to the gas phase reactor when this reactor is producing the HMW fraction.

The polymerization is conducted in the presence of an olefin polymerization catalyst. The catalyst preferably is a Ziegler-Natta (ZN) catalyst which generally comprises at least a catalyst component formed from a transition metal compound of Group 4 to 6 of the Periodic Table (IUPAC, Nomenclature of Inorganic Chemistry, 1989), a metal compound of Group 1 to 3 of the Periodic Table (IUPAC), optionally a compound of group 13 of the Periodic Table (IUPAC), and optionally an internal organic compound, like an internal electron donor. A ZN catalyst may also comprise further catalyst component(s), such as a cocatalyst and optionally external additives.

Suitable ZN catalysts preferably contain a magnesium compound, an aluminium compound and a titanium compound supported on a particulate support.

The particulate support can be an inorganic oxide support, such as silica, alumina, titania, silica-alumina, silica-titania or a $MgCl_2$ based support. Preferably, the support is silica or a $MgCl_2$ based support.

Particularly preferred Ziegler-Natta catalysts are such as described in EP 1378528 A1.

If used, the magnesium compound preferably is a reaction product of a magnesium di and an alcohol. The alcohol is a linear or branched aliphatic monoalcohol. Preferably, the alcohol has from 6 to 16 carbon atoms. Branched alcohols are especially preferred, and 2-ethyl-1-hexanol is one example of the preferred alcohols. The magnesium dialkyl may be any compound of magnesium bonding to two alkyl groups, which may be the same or different. Butyl-octyl magnesium is one example of the preferred magnesium dialkyls.

The aluminium compound is a chlorine containing aluminium alkyl. Especially preferred compounds are aluminium alkyl dichlorides and aluminium alkyl sesquichlorides.

The transition metal compound of Group 4 to 6 is preferably a titanium or vanadium compound, more preferably a halogen containing titanium compound, most preferably chlorine containing titanium compound. Especially preferred titanium compound is titanium tetrachloride.

The catalyst can be prepared by sequentially contacting the carrier with the above mentioned compounds, as described in EP 688794 or WO 99/51646. Alternatively, it can be prepared by first preparing a solution from the components and then contacting the solution with a carrier, as described in WO 01/55230.

Another group of suitable ZN catalysts contain a titanium compound together with a magnesium halide compound acting as a support. Thus, the catalyst contains a titanium compound and optionally a Group 13 compound for example an aluminium compound on a magnesium dihalide, like magnesium dichloride. Such catalysts are disclosed, for instance, in WO 2005/118655, EP 810235, WO 2014/096296 and WO 2016/097193.

Suitable activators are group 13 metal compounds, typically group 13 alkyl compounds and especially aluminium alkyl compounds, where the alkyl group contains 1 to 16 C-atoms. These compounds include trialkyl aluminium compounds, such as trimethylaluminium, triethylaluminium, tri-isobutylaluminium, trihexylaluminium and tri-n-octylaluminium, alkyl aluminium halides, such as ethylaluminium dichloride, diethylaluminium chloride, ethylaluminium sesquichloride, dimethylaluminium chloride and the like. Especially preferred activators are trialkylaluminiums, of which triethylaluminium, trimethylaluminium and tri-isobutylaluminium are particularly used.

The amount in which the activator is used depends on the specific catalyst and activator. Typically triethylaluminium is used in such amount that the molar ratio of aluminium to the transition metal, like Al/Ti, is from 1 to 1000, preferably from 3 to 100 and in particular from about 5 to about 30 mol/mol.

An optional internal organic compound may be chosen from the following classes: ethers, esters, amines, ketones, alcohols, anhydrides or nitriles or mixtures thereof. Preferably, the optional internal organic compound is selected from ethers and esters, most preferably from ethers. Preferred ethers are of 2 to 20 carbon-atoms and especially mono, di or multi cyclic saturated or unsaturated ethers comprising 3 to 6 ring atoms. Typical cyclic ethers suitable in the present invention, if used, are tetrahydrofuran (THF), substituted THF, like 2-methyl THF, di-cyclic ethers, like 2,2-di(2-tetrahydrofuryl)propane, 2,2-di-(2-furan)-propane, or isomers or mixtures thereof. Internal organic compounds are also often called as internal electron donors.

The composition of the invention preferably is produced in a process comprising a compounding step, wherein the composition, i.e. the blend, which is typically obtained as a polyolefin base resin powder from the reactor, is extruded in an extruder and then pelletized to polymer pellets in a manner known in the art. The extruder may be e.g. any conventionally used extruder. As an example of an extruder for the present compounding step may be those supplied by Japan Steel works, Kobe Steel or Farrel-Pomini, e.g. JSW 460P or JSW CIM90P.

In certain embodiments, the extrusion step is carried out using feed rates of 100 kg/h to 500 kg/h, more preferably 150 kg/h to 300 kg/h.

The screw speed of the extruder may be 200 rpm to 500 rpm, more preferably 300 rpm to 450 rpm.

In certain embodiments, in said extrusion step the SEI (specific energy input) of the extruder may be 100 kWh/ton to 400 kWh/ton, more preferably 125 kWh/ton to 300 kWh/ton.

The melt temperature in said extrusion step is preferably 200°C to 300°C, more preferably 230°C to 270°C.

According to a further aspect the invention relates to a polyethylene composition obtainable by a multistage process as mentioned above, in particular the multistage process comprises, or consists of, the steps of

    a) polymerizing ethylene in the presence of

    -   a catalyst,

    -   in one or more loop reactor(s), preferably in one or two loop reactor(s), in the presence of an alkyl aluminium compound and a chain transfer agent for obtaining fraction (A), the fraction (A) having a melt flow rate $MFR_2$ from 1 to 150 g/10 min, preferably from 5 to 100 g/10 min, more preferably 7.5 to 75 g/10min and even more preferably 10 to 50 g/10min; and

    b) transferring fraction (A) to a gas phase reactor

    -   feeding ethylene and comonomer to the gas phase reactor,

    -   further polymerizing to obtain a base resin comprising fraction (A) obtained in step a) and fraction (B) obtained in step b),

    wherein fraction (B) has a content of units derived from the comonomer of 0.30 to 1.00 mol% and wherein fraction (B) is present in an amount of from 45 to 70 wt% based on the total weight of the base resin;

    c) extruding the base resin into a polyethylene composition having a melt flow rate $MFR_5$ from 0.10 to 0.35 g/10min, preferably from 0.10 to 0.25 g/10min; wherein the polyethylene composition has a strain hardening modulus from 50 to 150 MPa.

According to a preferred embodiment the process comprises a prepolymerization step before step a).

Further preferred the polymerization catalyst is a ZN catalyst.

In a further aspect the invention relates to an article comprising, or consisting of, a polyethylene composition in any one of the embodiments as herein described.

Preferably, the article is a pipe or a fitting.

Further preferred the article is a pipe, wherein the pipe has a resistance to stress cracking measured by the notched pipe test of more than 500 hours, more preferably of more than 600 hours.

Further preferred the article is a pipe, wherein the pipe has a critical temperature, Tc, of - 15 °C or lower, preferably of -17 °C lower and more preferably of -20°C or lower.

According to another aspect the invention relates to the use of the polyethylene composition in any one of the embodiments as herein described for producing an article, preferably a pipe or a fitting.

In further aspect the invention relates to the use of polyethylene composition as described above for improving the pressure resistance at a temperature of 30°C or more of a pipe or a fitting. The improvement refers to a pressure resistance at 30°C or more for 50 years or more of more than 10 MPa.

Unless explicitly described otherwise, the description of the present invention is to be understood so that one or more of any of the above described preferred embodiments of the invention can be combined with the invention described in its most general features.

For sake of completeness it should be remarked that while certain properties (such as short term pressure resistance) are tested on specific test pipe specimens (such as pipes of a specific thickness and diameter), they are nevertheless properties of the polymer composition used for making the test pipe specimen.

In the following, the measurement and determination methods for the parameters as used herein are given and the present invention is further illustrated by way of inventive example and comparative example.

**Measurement and Determination methods**

Unless otherwise stated the following methods were used for determining the properties of the polymer composition or the components thereof as given in the description or in the experimental part and claims below. Unless otherwise stated, the samples used in the tests consist of the polymer composition or, respectively as specified, of the polymer component to be tested.

*Melt flow rate*

The melt flow rate (MFR) is determined according to ISO 1133 and is indicated in g/10 min. The higher the melt flow rate, the lower the viscosity of the polymer. The MFR is determined at 190 °C for polyethylene and at a loading of 2.16 kg ($MFR_2$), 5.00 kg ($MFR_5$) or 21.6 kg ($MFR_{21}$). The quantity FRR (flow rate ratio) is an indication of molecular weight distribution and denotes the ratio of flow rates at different loadings. Thus, $FRR_{21/5}$ denotes the value of $MFR_{21}/MFR_5$.

*Molecular weight properties*

Molecular weight averages (Mz, Mw and Mn), molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)}$$

$$M_w = \frac{\sum_{i=1}^{N} (A_i \; x \; M_i)}{\sum A_i}$$

$$M_z = \frac{\sum_{i=1}^{N} \left( A_i \; x \; M_i^2 \right)}{\sum (A_i/M_i)}$$

For a constant elution interval $\Delta V_i$, where $A_i$ and $M_i$ are the chromatographic peak slice area and polyolefin molecular weight (MW).

A PolymerChar GPC instrument, equipped with infrared (IR) detector was used with 3x Olexis and 1x Olexis Guard columns from Polymer Laboratories and 1,2,4-trichlorobenzene (TCB, stabilized with 250 mg/l 2,6-Di-tert-butyl-4-methyl-phenol) as solvent at 160 °C and at a constant flow rate of 1 ml/min. 200 $\mu$L of sample solution were injected per analysis. The column set was calibrated using universal calibration (according to ISO 16014-2:2003) with at least 15 narrow MWD polystyrene (PS) standards in the range of 0.5 kg/mol to 11500 kg/mol. Mark Houwink constants used for PS, PE and PP are as described per ASTM D 6474-99. All samples were prepared by dissolving 5.0 to 9.0 mg of polymer in 8 ml (at 160 °C) of stabilized TCB (same as mobile phase) for 2.5 hours for PP or 3 hours for PE at 160 °C under continuous gentle shaking in the autosampler of the GPC instrument.

*Density*

Density of the polymer was measured according to ISO 1183-1:2004 (method A) on compression moulded specimen prepared according to EN ISO 1872-2(Feb 2007) and is given in kg/m$^3$.

*Pressure test on notched pipes (NPT)*

The slow crack propagation resistance is determined according to ISO 13479-2009 in terms of the number of hours the pipe withstands a certain pressure at a certain temperature before failure. The pressure test is carried out on notched SDR11 pipes having an outer diameter of 110 mm. A pressure of 9.2 bars and a temperature of 80 °C have been used. Notching is made with a climb milling cutter with a 60° included-angle V-cutter conforming to ISO 6108, having a cutting rate of 0.010 ± 0.002 (mm/rev)/tooth. The used cutter has 24 teeth and the speed of the cutter is 680 rpm. The remaining ligament is 0.82-0.78 times the minimum wall thickness. The depth of the notch is calculated using equation below. h is the notch depth in mm. The four notches are equally placed in the pipe circumference.

The length of the notch is 110 ± 1 mm.

$$h = 0.5\left[d_{em} - \sqrt{(d_{em}^2 - b_s^2)}\right] + 0.866 b_s$$

where

$b_s$: is the width of machined surface of the notch, in millimetres; $d_{em}$: is the measured mean pipe outside diameter, in millimetres.

*Rapid crack propagation*

The rapid crack propagation (RCP) resistance of a pipe may be determined according to a method called the S4 test (Small Scale Steady State), which has been developed at Imperial College, London, and which is described in ISO 13477:2008. The outer diameter of the pipe is about 110 mm or greater and its wall thickness about 10 mm or greater. When determining the RCP properties of a pipe in connection with the present invention, the outer diameter and the wall thickness have been selected to be 110 mm and 10 mm, respectively. The length of the pipe is 785 mm. While the exterior of the pipe is at ambient pressure (atmospheric pressure), the pipe is pressurized internally, and the internal pressure in the pipe is kept constant at a pressure of 4.0 bar positive pressure. The length of the gauge is 590 mm. The pipe and the equipment surrounding it are conditioned to a predetermined temperature. A number of discs have been mounted on a shaft inside the pipe to prevent decompression during the tests. A knife projectile is shot, with well-defined forms, and a mass of 1500 g towards the pipe close to its one end in the so-called initiating zone in order to start a rapidly running axial crack. The speed of the knife is 16 +/-1 m/s. The initiating zone is provided with an abutment for avoiding unnecessary deformation of the pipe. The test equipment is adjusted in such a manner that crack initiation takes place in the material involved, and a number of tests are effected at varying temperatures. The axial crack length in the measuring zone, having a total length of 4.7 diameters, is measured for each test and is plotted against the set test temperature. If the crack length exceeds 4.7 diameters, the crack is assessed to propagate. If the pipe passes the test at a given temperature, the temperature is lowered successively until a temperature is reached, at which the pipe no longer passes the test where the crack propagation exceeds 4.7 times the pipe diameter.

The critical temperature ($T_c$) i.e. the ductile brittle transition temperature as measured according to ISO 13477:2008 is the lowest temperature at which the pipe passes the test. The lower the critical temperature the better, since it results in an extension of the applicability of the pipe.

*Short term Pressure resistance*

The pressure test on un-notched 32 mm SDR 11 pipes having a length of 450 mm is carried out in water-inside and water-outside environment according to ISO 1167-1:2006. End caps type A were used. The time to failure is determined in hours. A hoop stress of 5.0-6.2 MPa (exact stress level can be found in Table 3) and a temperature of 80 °C were applied.

*Charpy impact strength (CIS)*

Charpy impact strength was determined according to ISO179/1eA:2000 on V-notched samples of 80*10*4 mm$^3$ at 23°C (Charpy impact strength (23°C)), at 0 °C (Charpy impact strength (0 °C)) and -20 °C (Charpy impact strength (-20 °C)). Samples were milled from plaques of 4 mm thickness prepared by compression molding according to ISO 293:2004 using the conditions defined in chapter 3.3 of ISO 1872-2:2007.

*Tensile modulus (23°C)*

As a measure for stiffness, the tensile modulus (E-modulus) of the compositions was measured at 23 °C on compression molded specimens according to ISO 527-2:1993. The specimens (1 B type) were milled from plaques of 4 mm thickness prepared by compression molding according to ISO 293:2004 using the conditions defined in chapter 3.3 of ISO 1872-2:2007. The modulus was measured at a speed of 1 mm/min.

*Stress at yield (Tensile testing at 80°C and strain rate of E-4 s$^{-1}$)*

5a type specimens according ISO 527-2 were milled from compression moulded plaques. Tensile tests were conducted at 80°C and a strain rate of E-4 s$^{-1}$ (corresponding to a test speed of 0.3 mm at 50 mm clamping length). The specimens were conditioned at the test temperature for half an hour prior to testing. The yield stress was determined as the first peak in the nominal stress-strain curve. The yielding kinetics in PE at these test conditions display a less pronounced test speed dependence than at room temperature testing and thus correspond better with the long-term yielding properties.

*Rheology*

The characterization of polymer melts by dynamic shear measurements complies with ISO standards 6721-1 and 6721-10. The measurements were performed on an Anton Paar MCR501 stress controlled rotational rheometer, equipped with a 25 mm parallel plate geometry. Measurements were undertaken on compression molded plates, using nitrogen atmosphere and setting a strain within the linear viscoelastic regime. The oscillatory shear tests were done at a temperature of 190°C applying a frequency range between 0.01 and 628 rad/s and setting a gap of 1.3 mm.

In a dynamic shear experiment the probe is subjected to a homogeneous deformation at a sinusoidal varying shear strain or shear stress (strain and stress controlled mode, respectively). On a controlled strain experiment, the probe is subjected to a sinusoidal strain that can be expressed by

$$\gamma(t) = \gamma_0 \sin(\omega t) \qquad (1)$$

If the applied strain is within the linear viscoelastic regime, the resulting sinusoidal stress response can be given by

$$\sigma(t) = \sigma_0 \sin(\omega t + \delta) \qquad (2)$$

where

$\sigma_0$ and $\gamma_0$ are the stress and strain amplitudes, respectively,
$\omega$ is the angular frequency,
$\delta$ is the phase shift (loss angle between applied strain and stress response),
t is the time.

Dynamic test results are typically expressed by means of several different rheological functions, namely the shear storage modulus G', the shear loss modulus, G", the complex shear modulus, G*, the complex shear viscosity, $\eta$*, the dynamic shear viscosity, $\eta$', the out-of-phase component of the complex shear viscosity $\eta$" and the loss tangent, tan $\delta$ which can be expressed as follows:

$$G' = \frac{\sigma_0}{\gamma_0} \cos\delta \ [Pa] \qquad (3)$$

$$G' = \frac{\sigma_0}{\gamma_0} \sin\delta \ [Pa] \qquad (4)$$

$$G^* = G' + iG'' \ [\text{Pa}] \tag{5}$$

$$\eta^* = \eta' - i\eta'' \ [\text{Pa.s}] \tag{6}$$

$$\eta' = \frac{G''}{\omega} \ [\text{Pa.s}] \tag{7}$$

$$\eta'' = \frac{G'}{\omega} \ [\text{Pa.s}] \tag{8}$$

The values of storage modulus (G'), loss modulus (G"), complex modulus (G*) and complex viscosity ($\eta^*$) were obtained as a function of frequency ($\omega$). Thereby, e.g. $\eta^*_{0.05 \text{ rad/s}}$ (eta$^*_{0.05 \text{ rad/s}}$) is used as abbreviation for the complex viscosity at the frequency of 0.05 rad/s or $\eta^*_{300 \text{ rad/s}}$ (eta$^*_{300 \text{ rad/s}}$) is used as abbreviation for the complex viscosity at the frequency of 300 rad/s.

Shear thinning index (SHI), which correlates with MWD and is independent of $M_w$, was obtained by calculating the complex viscosities at given values of complex modulus and calculating the ratio of the two viscosities. For example, using the values of complex modulus of 2.7 kPa and 210 kPa, then $\eta^*(2.7 \text{ kPa})$ and $\eta^*(210 \text{ kPa})$ are obtained at a constant value of complex modulus of 2.7 kPa and 210 kPa, respectively. The shear thinning index $\text{SHI}_{2.7/210}$ is then defined as the ratio of the two viscosities $\eta^*(2.7 \text{ kPa})$ and $\eta^*(210 \text{ kPa})$, i.e. $\eta(2.7)/\eta(210)$. In case that viscosity data are not available at the given complex modulus of 2.7 kPa or 210 kPa, single point interpolation with an activated extrapolation option was done with the software Rheoplus from Anton Paar Germany GmbH.

*PI:*

The polydispersity index, *PI,* is defined by equation:

$$PI = \frac{10^5}{G'(\omega_{COP})}, \quad \omega_{COP} = \omega \ for \ (G' = G'')$$

where, $\omega_{COP}$ is the cross-over angular frequency, determined as the angular frequency for which the storage modulus, G' equals the loss modulus, G".

*Eta$_{747}$:*

One method which correlates well with the sagging properties, and is used in connection with the present invention relates to the rheology of the polymer and is based on determination of the viscosity of the polymer at a very low, constant shear stress. A shear stress of 747 Pa has been selected for this method. The viscosity of the polymer at this shear stress is determined at a temperature of 190 °C and has been found to be inversely proportional to the gravity flow of the polymer, i.e. the greater the viscosity the lower the gravity flow.

The determination of the viscosity at 747 Pa shear stress is made by using a rotational rheometer, which can be a constant stress rheometer as for example an Anton Paar MCR Series Rheometer. Rheometers and their function have been described in "Encyclopedia of Polymer Science and Engineering", 2nd Ed., Vol. 14, pp. 492-509. The measurements are performed under a constant shear stress between two 25 mm diameter plates (constant rotation direction). The gap between the plates is 1.2 mm. A 1.2 mm thick polymer sample is inserted between the plates.

The sample is temperature conditioned during 2 min before the measurement is started. The measurement is performed at 190 °C. After temperature conditioning the measurement starts by applying the predetermined stress. The stress is maintained during 1800 s to let the system approach steady state conditions. After this time the measurement starts and the viscosity is calculated.

The measurement principle is to apply a certain torque to the plate axis via a precision motor. This torque is then translated into a shear stress in the sample. This shear stress is kept constant. The rotational speed produced by the shear stress is recorded and used for the calculation of the viscosity of the sample.

*Strain hardening (SH) modulus*

Strain hardening modulus of the compounds was obtained from a tensile stress-strain curve above the natural draw ratio and represents the slope of the increase in the stress-strain trend at very high strains (the strain hardening regime). It was measured at 80°C and 20 mm/min on preconditioned (120°C/1h) 300 $\mu$m thick specimens according to ISO 18488.

*White spot rating (WSR)*

A sample of the composition (including a pigment to make the inhomogeneities visible, i.e. carbon black) is obtained after the compounding step. Microtome cuts with a thickness of about 10 $\mu$m were made from 6 pellets of the respective sample perpendicular to extrusion direction. The microtome cuts were characterized by light microscopy (ZEISS microscope Axioimager) to get white spot rating according to ISO 18553.

*Quantification of microstructure by NMR spectroscopy*

Quantitative nuclear-magnetic resonance (NMR) spectroscopy was used to quantify the comonomer content of the polymer.

Quantitative $^{13}C\{^{1}H\}$ NMR spectra recorded in the molten-state using a Bruker Avance III 500 NMR spectrometer operating at 500.13 and 125.76 MHz for $^{1}H$ and $^{13}C$ respectively. All spectra were recorded using a $^{13}C$ optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification (Klimke, K., Parkinson, M., Piel, C., Kaminsky, W., Spiess, H.W., Wilhelm, M., Macromol. Chem. Phys. 2006;207:382; Parkinson, M., Klimke, K., Spiess, H.W., Wilhelm, M., Macromol. Chem. Phys. 2007;208:2128; Castignolles, P., Graf, R., Parkinson, M., Wilhelm, M., Gaborieau, M., Polymer 50 (2009) 237).

Standard single-pulse excitation was employed utilising the NOE at short recycle delays of 3 s (Pollard, M., Klimke, K., Graf, R., Spiess, H.W., Wilhelm, M., Sperber, O., Piel, C., Kaminsky, W., Macromolecules 2004;37:813; Klimke, K., Parkinson, M., Piel, C., Kaminsky, W., Spiess, H.W., Wilhelm, M., Macromol. Chem. Phys. 2006;207:382) and the RS-HEPT decoupling scheme (Filip, X., Tripon, C., Filip, C., J. Mag. Resn. 2005, 176, 239; Griffin, J.M., Tripon, C., Samoson, A., Filip, C., and Brown, S.P., Mag. Res. in Chem. 2007 45, S1, S198). A total of 16384 (16k) transients were acquired per spectra.

Quantitative $^{13}C\{^{1}H\}$ NMR spectra were processed, integrated and relevant quantitative properties determined from the integrals. All chemical shifts are internally referenced to the bulk methylene signal (d) at 30.00 ppm (J. Randall, Macromol. Sci., Rev. Macromol. Chem. Phys. 1989, C29, 201).

Characteristic signals corresponding to the incorporation of 1-hexene were observed (J. Randall, Macromol. Sci., Rev. Macromol. Chem. Phys. 1989, C29, 201). The amount of isolated 1-hexene incorporated in EEHEE sequences was quantified using the integral of the *B4 sites ($I_{*B4}$) at 38.2 ppm accounting for the number of reporting sites per comonomer:

$$H = I_{*B4}$$

Characteristic signals resulting from saturated end-groups were observed. The content of such saturated end-groups was quantified using the average of the integral of the signals at 22.8 ppm and 32.2 ppm assigned to the 2s ($I_{2S}$) and 3s ($I_{3S}$) sites respectively:

$$S = (1/2)*( I_{2S} + I_{3S} )$$

The amount of ethylene was quantified using the integral of the bulk methylene ($I_d$) sites at 30.00 ppm. This integral included the g site as well as the 3B4 sites from 1-hexene.

The total ethylene content was calculated based on the bulk integral and compensating for the observed 1-hexene sequence and end-group:

$$E = (I_d / 2) + (3*H/2) - (H/2) + (3*S/2)$$

The total mole fraction of 1-hexene in the polymer was then calculated as:

$$fH = H / ( E + H )$$

The mole percent comonomer incorporation was calculated from the mole fraction:

$$H \ [mol\%] = 100 * fH$$

The weight percent comonomer incorporation was calculated from the mole fraction:

$$H \ [wt\%] = 100 * ( fH * 84.16 ) / ( (fH * 84.16) + ((1\text{-}fH) * 28.05) )$$

The comonomer incorporation of 1-hexene in mole percent in high Mw fraction was calculated from the total comonomer incorporation in the usual manner:

$$H \ in \ HMW \ [mol\%] = 100 \ \% * H \ [mol\%] / Split \ of \ HMW \ fraction \ [\%]$$

Note, that amount of HDPE from master batch carrier resin is not taken into account.

## Catalysts

*Catalyst A*

Catalyst A was prepared according to Example 1 of EP 1378528.

*Catalyst B*

Catalyst B was prepared according to the Reference Example 2 of WO 2016/124676.

## Examples

Polyethylene base resins and compositions according to the invention and for comparison were produced using catalyst A or catalyst B.

Inventive Example 1 (IE1):

A loop reactor having a volume of 50 dm$^3$ was operated at a temperature of 60 °C and a pressure of 55 bar. Into the reactor were fed ethylene, propane diluent and hydrogen. Also a solid polymerization catalyst component A produced as described above was introduced into the reactor together with triethylaluminium cocatalyst so that the molar ratio of Al/Ti was about 15 mol/mol. The estimated production split was 3wt%.

A stream of slurry was continuously withdrawn and directed to a loop reactor having a volume of 150 dm$^3$ and which was operated at a temperature of 95 °C and a pressure of 54 bar. Into the reactor were further fed additional ethylene, propane diluent and hydrogen so that the ethylene concentration in the fluid mixture was 5.2 % by mole and the hydrogen to ethylene ratio was 193 mol/kmol. The estimated production split was 20 wt%. The ethylene homopolymer withdrawn from the reactor had MFR$_2$ of 5 g/10 min.

A stream of slurry from the reactor was withdrawn intermittently and directed into a loop reactor having a volume of 350 dm$^3$ and which was operated at 95 °C temperature and 52 bar pressure. Into the reactor was further added a fresh propane, ethylene, and hydrogen so that the ethylene concentration in the fluid mixture was 5.2 mol-% and the molar ratio of hydrogen to ethylene was 207 mol/kmol. The ethylene homopolymer withdrawn from the reactor had MFR2 of 13 g/10 min. The estimated production split was 27 wt%.

The slurry was withdrawn from the loop reactor intermittently and directed to a flash vessel operated at a temperature of 50 °C and a pressure of 3 bar. From there the polymer was directed to a fluidized bed gas phase reactor operated at a pressure of 20 bar and a temperature of 85 °C. Additional ethylene and 1-hexene comonomer, nitrogen as inert gas and hydrogen were added so that the molar ratio of hydrogen to ethylene was 30 mol/kmol and the molar ratio of 1-hexene to ethylene was 37 mol/kmol. The estimated production split was 50 wt%. The polymer had a melt flow rate $MFR_5$ of 0.15 g/10 min and a density of 947.2 kg/m$^3$.

IE2 to IE11 and CE1 to CE7:

The procedure of IE1 was repeated by changing reactor conditions as described in Tables 1 and 2.

The polymer powder of each of the samples IE1 to IE 11 and CE1 to CE7 was mixed under nitrogen atmosphere with 5.5% of carbon black master-batch (CB content 40%), 2500 ppm of antioxidants and 400 ppm Ca-stearate. Then it was compounded and extruded under nitrogen atmosphere to pellets by using a JSW CIMP90 twin screw extruder with the melt temperature 250 °C and SEI specified in below tables to obtain the polyethylene compositions.

Polymerization conditions and properties of the produced base resins and polyethylene compositions of the inventive and comparative examples are shown in Tables 1, 2 and 3.

**Table 1: Polymerization conditions for inventive examples**

| | IE1 | IE2 | IE3 | IE4 | IE5 | IE6 | IE7 | IE8 | IE9 | IE10 | IE11 |
|---|---|---|---|---|---|---|---|---|---|---|---|
| Catalyst | A | A | A | A | A | A | B | B | B | B | B |
| **Prepoly reactor** | | | | | | | | | | | |
| Temp. (°C) | 60 | 60 | 70 | 70 | 70 | 70 | 60 | 60 | 60 | 60 | 60 |
| Press. (kPa) | 5550 | 5541 | 5618 | 5601 | 5601 | 5601 | 5707 | 5705 | 5798 | 5802 | 5802 |
| Split (%) | 3 | 3 | 2 | 2 | 2 | 2 | 3 | 3 | 3 | 3 | 3 |
| **First loop reactor** | | | | | | | | | | | |
| Temp. (°C) | 95 | 95 | 95 | 95 | 95 | 95 | 95 | 95 | 95 | 95 | 95 |
| Press. (kPa) | 5442 | 5437 | 5455 | 5404 | 5409 | 5413 | 5573 | 5579 | 5555 | 5556 | 5556 |
| C2 conc. (mol-%) | 5,2 | 3,8 | 7,0 | 3,9 | 5,1 | 4,7 | 2,4 | 3,0 | 4,1 | 4,3 | 4,3 |
| H2/C2 ratio (mol/ kmol) | 193 | 444 | 148 | 206 | 149 | 156 | 419 | 426 | 248 | 251 | 258 |
| Split (%) | 20 | 15 | 14 | 13 | 14 | 13 | 20 | 19 | 20 | 20 | 20 |
| MFR2 (g/10 min) | 5 | 45 | 25 | 49 | 32 | 35 | 68 | 50 | 21 | 18 | 22 |
| **Second loop reactor** | | | | | | | | | | | |
| Temp. (°C) | 95 | 95 | 95 | 95 | 95 | 95 | 95 | 95 | 95 | 95 | 95 |
| Press. (kPa) | 5211 | 5207 | 5291 | 5389 | 5388 | 5388 | 5481 | 5492 | 5393 | 5394 | 5395 |
| C2 conc. (mol-%) | 5,2 | 4,8 | 4,4 | 3,8 | 4,2 | 4,1 | 2,8 | 3,3 | 4,6 | 4,7 | 4,8 |
| H2/C2 ratio (mol/ kmol) | 207 | 381 | 171 | 166 | 141 | 138 | 380 | 419 | 250 | 258 | 256 |
| Split (%) | 27 | 21 | 29 | 30 | 29 | 30 | 26 | 27 | 24 | 24 | 24 |
| MFR2 (g/10 min) | 13 | 86 | 41 | 30 | 29 | 24 | 147 | 150 | 27 | 30 | 29 |
| **Gas phase reactor** | | | | | | | | | | | |
| Temp. (°C) | 85 | 85 | 85 | 85 | 85 | 85 | 85 | 85 | 85 | 85 | 85 |
| Press. (kPa) | 2000 | 2000 | 2000 | 2000 | 2000 | 2000 | 2000 | 2000 | 2000 | 2000 | 2000 |
| H2/C2 ratio (mol/ kmol) | 30 | 49 | 9 | 5 | 5 | 7 | 34 | 40 | 25 | 25 | 25 |
| C6/C2 ratio (mol/ kmol) | 37 | 36 | 15 | 29 | 25 | 21 | 33 | 33 | 33 | 33 | 33 |
| Split (%) | 50 | 61 | 55 | 55 | 55 | 55 | 51 | 51 | 53 | 53 | 53 |

(continued)

| Power | | | | | | | | | | | f 1 |
|---|---|---|---|---|---|---|---|---|---|---|---|
| Density (kg/m3) | 947,2 | 947,2 | 949,7 | 947,4 | 947,7 | 948,8 | 951,1 | 951,7 | 950,1 | 950,2 | 950,7 |
| MFR5 (g/10 min) | 0,15 | 0,15 | 0,11 | 0,15 | 0,18 | 0,14 | 0,20 | 0,23 | 0,15 | 0,15 | 0,16 |
| **Compound** | | | | | | | | | | | |
| MFR5 (g/10 min) | 0,14 | 0,16 | 0,14 | 0,15 | 0,16 | 0,14 | 0,21 | 0,23 | 0,14 | 0,15 | 0,16 |
| MFR21 (g/10 min) | 3,01 | 3,00 | 3,45 | 3,73 | 3,65 | 3,43 | 5,71 | 6,34 | 3,45 | 3,73 | 3,8 |
| Density (kg/m3) | 958,3 | 958,4 | 962,4 | 958,9 | 960,8 | 961,5 | 963,0 | 963,1 | 960,3 | 962,0 | 960,3 |
| PE White spots | 5,7 | 3,0 | 5,2 | 6,2 | 5,6 | 5,20 | 5,0 | 5,5 | | | |
| White Spot Area | 0,40 | 0,02 | 0,35 | 0,71 | 0,60 | 0,36 | | | | | |
| SEI (kwh/t) | 189,3 | 197,2 | 175,4 | 185,1 | 178,7 | 180,5 | 160,6 | 133,6 | 178,7 | 181,6 | 181,7 |
| Melt pump power (kW) | 8,0 | 8,2 | 9,7 | 9,8 | 10,1 | 12,2 | 8,2 | 7,2 | 8,3 | 8,1 | 8,3 |

**Table 2: Polymerization conditions for comparative examples**

| | CE1 | CE2 | CE3 | CE4 | CE5 | CE6 | CE7 |
|---|---|---|---|---|---|---|---|
| Catalyst | A | A | B | B | B | B | B |
| **Prepoly reactor** | | | | | | | |
| Temp. (°C) | 70 | 70 | 60 | 60 | 60 | 60 | 60 |
| Press. (kPa) | 5625 | 5771 | 5705 | 5708 | 5713 | 5689 | 5708 |
| Split (%) | 2 | 2 | 3 | 3 | 3 | 3 | 3 |
| **First loop reactor** | | | | | | | |
| Temp. (°C) | 95 | 95 | 95 | 95 | 95 | 95 | 95 |
| Press. (kPa) | 5453 | 5536 | 5585 | 5584 | 5587 | 5586 | 5582 |
| C2 conc. (mol-%) | 7,0 | 3,4 | 3,4 | 3,4 | 3,0 | 3,8 | 3,0 |
| H2/C2 ratio (mol/kmol) | 154 | 415 | 634 | 583 | 599 | 618 | 618 |
| Split (%) | 14 | 16 | 21 | 19 | 22 | 17 | 22 |
| MFR2 (g/10 min) | 29 | 657 | 189 | 144 | 135 | 256 | 168 |
| **Second loop reactor** | | | | | | | |
| Temp. (°C) | 95 | 95 | 95 | 95 | 95 | 95 | 95 |
| Press. (kPa) | 5292 | 5393 | 5505 | 5500 | 5503 | 5499 | 5490 |
| C2 conc. (mol-%) | 4,4 | 3,3 | 4,1 | 3,5 | 3,8 | 3,5 | 3,5 |
| H2/C2 ratio (mol/kmol) | 169 | 345 | 649 | 563 | 552 | 647 | 552 |
| Split (%) | 29 | 27 | 30 | 30 | 32 | 25 | 30 |
| MFR2 (g/10 min) | 34 | 350 | 440 | 400 | 237 | 596 | 440 |
| **GPR** | | | | | | | |
| Temp. (°C) | 85 | 80 | 85 | 85 | 85 | 85 | 85 |
| Press. (kPa) | 2000 | 2002 | 2000 | 2000 | 2000 | 2000 | 2000 |
| H2/C2 ratio (mol/kmol) | 14 | 7 | 15 | 49 | 1 | 35 | 52 |
| C6/C2 ratio (mol/kmol) | 5 | 59 | 14 | 79 | 91 | 7 | 24 |

(continued)

| GPR | | | | | | | |
|---|---|---|---|---|---|---|---|
| Split (%) | 55 | 55 | 46 | 48 | 43 | 55 | 45 |
| **Powder** | | | | | | | |
| Density (kg/m3) | 954,5 | 946,0 | 956,4 | 948,7 | 947,4 | 956,6 | 957,0 |
| MFR5 (g/10 min) | 0,13 | 0,20 | 0,07 | 0,40 | 0,13 | 0,10 | 0,50 |
| **Compound** | | | | | | | |
| MFR5 (g/10 min) | 0,14 | 0,22 | 0,08 | 0,43 | 0,14 | 0,10 | 0,52 |
| MFR21 (g/10 min) | 3,18 | 6,0 | 3,82 | 13,20 | 8,83 | 3,04 | 15,40 |
| Density (kg/m3) | 964,8 | 957,0 | 966,9 | 960,4 | 958,2 | 967,7 | 968,5 |
| PE White spots | 4,9 | 4,6 | 14,0 | 6,1 | 10,8 | 12,7 | 7,8 |
| White Spot Area | 0,7 | 0,32 | | | | | |
| SEI (kwh/t) | 181,8 | 174,3 | 157,7 | 154,8 | 178,4 | 165,0 | 183,2 |
| Melt pump power (kW) | 7,8 | 7,6 | 7,6 | 6,7 | 7,3 | 9,2 | 5,3 |

Table 3: Properties of inventive examples and comparative examples

| Example | IE1 | IE2 | IE3 | IE4 | IE5 | IE6 | IE7 | IE8 | IE9 | IE10 | IE11 | CE1 | CE2 | CE3 | CE4 | CE5 | CE6 | CE7 |
|---|---|---|---|---|---|---|---|---|---|---|---|---|---|---|---|---|---|---|
| PI [Pa$^{(-1)}$] | 2.01 | 1.58 | 2.26 | 2.5 | 2.44 | 2.38 | 2.28 | 2.19 | 2.21 | 2.34 | 2.25 | 2.21 | 2.61 | 2.95 | 2.7 | 3.9 | 1.89 | 2.7 |
| Eta747 [kPa*s] | 476 | 352 | 675 | 704 | 750 | 764 | 347 | 304 | 502 | 453 | 453 | 617 | 401 | 1390 | 167 | 1329 | 729 | 146 |
| Mn [g/mol] | 17650 | 14100 | 12350 | 13500 | 13900 | 14100 | 10800 | 10650 | 15500 | 15100 | 15300 | 11900 | 10400 | 8380 | 8415 | 8225 | 8615 | 8095 |
| Mw [g/mol] | 273500 | 254000 | 271500 | 277000 | 284500 | 287500 | 235000 | 233500 | 289000 | 275000 | 279000 | 275000 | 260000 | 329500 | 200000 | 315000 | 280500 | 193000 |
| Mz [kg/mol] | 1280 | 1105 | 1385 | 1305 | 1375 | 1360 | 1125 | 1105 | 1310 | 1250 | 1270 | 1375 | 1290 | 1665 | 1005 | 1750 | 1295 | 1015 |
| Mw/Mn | 15.5 | 18.0 | 22.0 | 20.5 | 20.5 | 20.4 | 21.8 | 21.9 | 18.6 | 18.2 | 18.2 | 23.1 | 25.0 | 39.3 | 23.8 | 38.3 | 32.6 | 23.8 |
| SH modulus [MPa] | 68.6 | 66.6 | 53 | 77.6 | 71.9 | 68.9 | 70 | 68.3 | 67.6 | 64.5 | 64.1 | 29.7 | 91.3 | 60 | 90.8 | 140 | 46.2 | 42 |
| Stress at yield [MPa] | 6.99 | 6.96 | 7.01 | 6.93 | 7 | 7.07 | 6.9 | 6.9 | 7.09 | 7.1 | 7.09 | 7.08 | 6.45 | 7.27 | 6.1 | 5.8 | 6.9 | 6.8 |
| C6 [mol%] | 0.33 | 0.36 | 0.27 | 0.38 | 0.35 | 0.27 | 0.32 | 0.33 | 0.25 | 0.25 | 0.26 | 0.06 | 0.64 | 0.12 | 0.72 | 0.91 | 0.08 | 0.21 |
| C6 in HMW [mol%] | 0.66 | 0.59 | 0.49 | 0.69 | 0.63 | 0.50 | 0.63 | 0.65 | 0.47 | 0.47 | 0.50 | 0.11 | 1.16 | 0.26 | 1.52 | 2.10 | 0.15 | 0.46 |
| STPR Stress level (80°C) [MPa] | 5.9 | 5.9 | 6.0 | 6.2 | 6.2 | 6.2 | 5.9 | 5.9 | n. m. | n. m. | n. m. | 5.0 | 5.8 | 5.8 | 5.4 | 5.0 | 5.4 | 5.6 |
| STPR Failure time[1] [h] | 3000 | >10963 | 2224 | 117 | 192 | 414 | 903 | 1446 | n. m. | n. m. | n. m. | 924 | 50 | 1508 | 90 | 2110 | 639 | 1399 |

(continued)

| Example | IE1 | IE2 | IE3 | IE4 | IE5 | IE6 | IE7 | IE8 | IE9 | IE10 | IE11 | CE1 | CE2 | CE3 | CE4 | CE5 | CE6 | CE7 |
|---|---|---|---|---|---|---|---|---|---|---|---|---|---|---|---|---|---|---|
| STPR Failure type[2] | D | | D | D | D | D | D | D | n. m. | n. m. | n. m. | B | D | B | D | D | B | B |
| Tc [°C] | -35.2 | -39.7 | -37.6 | -26.5 | -30.5 | | -24.1 | -21.7 | n. m. | n. m. | n. m. | -39.8 | -18.5 | -41.7 | -7.1 | -10.7 | -41.8 | -16.3 |
| NPT[3] [h] | 5796 | 7991 | 656 | >6000 | 4777 | 2979 | 1385 | 1278 | n. m. | n. m. | n. m. | 29 | | 274 | 5078 | 2856 | 45 | 76 |
| Tensile modulus [MPa] | 1068 | 1049 | 1128 | 1089 | 1116 | 1144 | 1043 | 1151 | n. m. | n. m. | n. m. | 1284 | 1043 | 1350 | 1061 | 1003 | 1344 | 1330 |
| CIS (23°C) [kJ/m$^2$] | 83.0 | 70.7 | 51.4 | n. m. | n. m. | n. m. | 39.7 | 37.9 | n. m. | n. m. | n. m. | 52.1 | 49.2 | 34.8 | 43.3 | 60.9 | 53.3 | 18.2 |
| CIS (0°C) [kJ/m$^2$] | 49.0 | 44.7 | 34.1 | 35.3 | 33.2 | 34.6 | 28.0 | 27.5 | n. m. | n. m. | n. m. | 35.4 | n. m. | 27.5 | 29.7 | 45.0 | 38.6 | 12.6 |
| CIS (-20°C) [kJ/m$^2$] | 39.1 | 35.8 | 29.3 | 27.3 | 26.4 | 27.8 | 18.7 | 17.9 | n. m. | n. m. | n. m. | 30.6 | 22.0 | 23.0 | 10.7 | 24.4 | 30.8 | 6.8 |

[1] Geometric average of two measurements.
[2] D = ductile; B = brittle.
[3] Geometric average of two measurements. S
n. m. = not measured

EP 4 179 021 B1

CEs 1, 3, 6 and 7 all show low NPT values, making these compositions unsuitable for PE100. The NPT is higher for CEs 4 and 5, but at the same time the stress at yield parameter is low. Contrary to this, the inventive examples achieve a good balance between notched pipe test results (measured of the slow crack growth resistance) and the stress at yield. This demonstrates that any deviation from the claimed polymer design yields an inferior balance of the above properties.

It is evident that all inventive examples have a superior balance between stress at yield and notched pipe test results and they all satisfy the following relationship: stress at yield > 9,58 - 0,92*log(NPT).

**Claims**

1. A polyethylene composition comprising a base resin which comprises

   (A) a first ethylene homo- or copolymer fraction having a melt flow rate $MFR_2$ from 1 to 150 g/10 min and
   (B) a second ethylene copolymer fraction having a content of units derived from a comonomer from 0.30 to 1.00 mol%,

   wherein fraction (A) has a lower molecular weight than fraction (B) and wherein fraction (B) is present in an amount of from 45 to 70 wt.% based on the total weight of the base resin;

   wherein the polyethylene composition has a melt flow rate $MFR_5$ from 0.10 to 0.35 g/10min; and
   wherein the polyethylene composition has a strain hardening modulus from 50 to 150 MPa.

2. The polyethylene composition according to claim 1,
   wherein the base resin has at least one of:

   a molecular weight distribution, being the ratio of Mw/Mn, from 10 to 25;
   a polydispersity index (PI) from 1.2 to 3.0 $Pa^{-1}$;
   a viscosity at a shear stress of 747 Pa ($eta_{747}$) from 200 to 800 kPa*s; and
   a density in the range of 940 to 957 $kg/m^3$.

3. The polyethylene composition according to any of the preceding claims,

   wherein in fraction (B) the units derived from a comonomer are units derived from at least one alpha-olefin comonomer; and/or
   wherein the base resin has a content of units derived from the comonomer of not more than 0.6 mol% based on the base resin.

4. The polyethylene composition according to any one of the preceding claims,

   wherein fraction (A) is an ethylene homopolymer; and/or
   wherein fraction (A) has a melt flow rate $MFR_2$ from 7.5 to 75 g/10min.

5. The polyethylene composition according to any of the preceding claims,

   wherein the base resin has been produced in a multistage process; or
   wherein the base resin has been produced in a multistage process in the presence of a Ziegler-Natta catalyst.

6. The polyethylene composition according to any of the preceding claims,
   wherein the base resin has an average molecular weight, Mn, in the range of from 9.000 to 20.000 g/mol.

7. The polyethylene composition according to any of the preceding claims,
   wherein the polyethylene composition has at least one of:

   a strain hardening modulus from 55 to 100 MPa;; a stress at yield at 80°C from 6.5 to 7.5 MPa;;
   a failure time in the short term pressure resistance (STPR) test at a stress level of 5.9 MPa at 80°C of at least 700h; and
   a failure time in the short term pressure resistance (STPR) test at a stress level of 6.2 MPa at 80°C of at least 70h; and/or

wherein the polyethylene composition satisfies the following inequation:

$$\text{Stress at yield at } 80°C > 9.58 - 0.92*\log (\text{NPT}).$$

8. A polyethylene composition obtainable by a multistage process, the multistage process comprising the steps of

a) polymerizing ethylene in the presence of

- a catalyst,
- in one or more loop reactor(s) in the presence of an alkyl aluminium compound and a chain transfer agent for obtaining fraction (A), the fraction (A) having a melt flow rate MFR2 from 1 to 150 g/10 min; and

b) transferring fraction (A) to a gas phase reactor

- feeding ethylene and comonomer to the gas phase reactor,
- further polymerizing to obtain a base resin comprising fraction (A) obtained in step a) and fraction (B) obtained in step b),

wherein fraction (B) has a content of units derived from the comonomer of 0.30 to 1.00 mol% and wherein fraction (B) is present in an amount of from 45 to 70 wt% based on the total weight of the base resin;
c) extruding the base resin into a polyethylene composition having a melt flow rate MFR5 from 0.10 to 0.35 g/10min; wherein the polyethylene composition has a strain hardening modulus from 50 to 150 MPa.

9. The polyethylene composition according to claim 8,
wherein the process comprises a prepolymerization step before step a).

10. The polyethylene composition according to any one of claims 8 or 9,

wherein the polymerization catalyst is a Ziegler-Natta catalyst; and/or
wherein the fraction (A) obtained in step a) has a melt flow rate from 7.5 to 75 g/10min and more preferably from 10 to 50 g/10min.

11. An article comprising a polyethylene composition according to any one of claims 1 to 10.

12. An article according to claim 11 which is a pipe or a fitting.

13. A pipe according to claim 12,

wherein the pipe has a resistance to stress cracking measured by the notched pipe test of more than 500 hours; and/or
wherein the pipe has a critical temperature, Tc, of -15 °C or lower.

14. Use of a polyethylene composition according to any one of claims 1 to 10 for producing an article.

15. Use of a polyethylene composition according to any one of claims 1 to 10 for improving the pressure resistance at a temperature of 30°C or more to more than 10 MPa of a pipe or a fitting.

**Patentansprüche**

1. Polyethylen-Zusammensetzung, die ein Basisharz enthält, das umfasst:

(A) eine erste Ethylen-Homo- oder Copolymer-Fraktion mit einer Schmelzflussrate $MFR_2$ von 1 bis 150 g/10 min, und
(B) eine zweite Ethylen-Copolymer-Fraktion, die einen Anteil von von einem Comonomer abgeleiteten Einheiten von 0,30 bis 1,00 mol-% aufweist,

wobei die Fraktion (A) ein geringeres Molekulargewicht aufweist als die Fraktion (B) und wobei die Fraktion (B) mit einem Anteil von 45 bis 70 Gew.-% basierend auf dem Gesamtgewicht des Basisharzes vorhanden ist, wobei die Polyethylen-Zusammensetzung eine Schmelzflussrate $MFR_5$ von 0,10 bis 0,35 g/10 min aufweist, und wobei die Polyethylen-Zusammensetzung ein Verfestigungsmodul von 50 bis 150 MPa aufweist.

2. Polyethylen-Zusammensetzung nach Anspruch 1,
wobei das Basisharz wenigstens eines der Folgenden aufweist:

eine Molekulargewichtverteilung, die das Verhältnis von Mw/Mn ist, von 10 bis 25,
einen Polydispersitätsindex (PI) von 1,2 bis 3,0 $Pa^{-1}$,
eine Viskosität bei einer Scherspannung von 747 Pa ($eta_{747}$) von 200 bis 800 kPa*s, und
eine Dichte im Bereich von 940 bis 957 $kg/m^3$.

3. Polyethylen-Zusammensetzung nach einem der vorstehenden Ansprüche,

wobei in der Fraktion (B) die von einem Comonomer abgeleiteten Einheiten von wenigstens einem Alpha-Olefin-Comonomer abgeleitete Einheiten sind, und/oder
wobei das Basisharz einen Anteil von von dem Comonomer abgeleiteten Einheiten von nicht mehr als 0,6 mol-% basierend auf dem Basisharz aufweist.

4. Polyethylen-Zusammensetzung nach einem der vorstehenden Ansprüche, wobei die Fraktion (A) ein Ethylen-Homopolymer ist, und/oder
wobei die Fraktion (A) eine Schmelzflussrate $MFR_2$ von 7,5 bis 75 g/10 min aufweist.

5. Polyethylen-Zusammensetzung nach einem der vorstehenden Ansprüche,

wobei das Basisharz in einem mehrstufigen Prozess erzeugt wurde, oder
wobei das Basisharz in einem mehrstufigen Prozess in Anwesenheit eines Ziegler-Natta-Katalysators erzeugt wurde.

6. Polyethylen-Zusammensetzung nach einem der vorstehenden Ansprüche,
wobei das Basisharz ein gemitteltes Molekulargewicht Mn im Bereich von 9.000 bis 20.000 g/mol aufweist.

7. Polyethylen-Zusammensetzung nach einem der vorstehenden Ansprüche,
wobei die Polyethylen-Zusammensetzung wenigstens eines der Folgenden aufweist:

ein Verfestigungsmodul von 55 bis 100 MPa,
eine Streckgrenze bei 80°C von 6,5 bis 7,5 MPa,
eine Ausfallzeit im Kurzfristiger-Druckwiderstand (Short Term Pressure Resistance bzw. STPR)-Test bei einem Beanspruchungsniveau von 5,9 MPa bei 80°C von wenigstens 700h, und
eine Ausfallzeit im STPR-Test bei einem Beanspruchungsniveau von 6,2 MPa bei 80°C von wenigstens 70h, und/oder
wobei die Polyethylen-Zusammensetzung die folgende Ungleichung erfüllt:

$$\text{Streckgrenze bei } 80°C > 9,58 - 0,92 \cdot \log (NPT).$$

8. Polyethylen-Zusammensetzung, die durch einen mehrstufigen Prozess erhalten werden kann, wobei der mehrstufige Prozess die folgenden Schritte umfasst:

a) Polymerisieren von Ethylen in Anwesenheit von:

- einem Katalysator,
- in einem oder mehreren Schlaufenreaktoren in Anwesenheit einer Alkyl-AluminiumVerbindung und eines Kettenübertragungsmittels für das Erhalten einer Fraktion (A), wobei die Fraktion (A) eine Schmelzflussrate $MFR_2$ von 1 bis 150 g/10 min aufweist, und

b) Übertragen der Fraktion (A) zu einem Gasphasenreaktor,

- Zuführen von Ethylen und eines Comonomers zu dem Gasphasenreaktor,
- weiteres Polymerisieren für das Erhalten eines Basisharzes, das die in Schritt a) erhaltene Fraktion (A) und die in Schritt b) erhaltene Fraktion (B) umfasst,

wobei die Fraktion (B) einen Anteil von von dem Comonomer abgeleiteten Einheiten von 0,30 bis 1,00 mol-% aufweist und wobei die Fraktion (B) mit einem Anteil von 45 bis 70 Gew.-% basierend auf dem Gesamtgewicht des Basisharzes vorhanden ist,

c) Extrudieren des Basisharzes in eine Polyethylen-Zusammensetzung mit einer Schmelzflussrate $MFR_5$ von 0,10 bis 0,35 g/10 min, wobei die Polyethylen-Zusammensetzung ein Verfestigungsmodul von 50 bis 150 MPa aufweist.

9. Polyethylen-Zusammensetzung nach Anspruch 8,
wobei der Prozess einen Vorpolymerisationsschritt vor dem Schritt a) umfasst.

10. Polyethylen-Zusammensetzung nach Anspruch 8 oder 9,

wobei der Polymerisationskatalysator ein Ziegler-Natta-Katalysator ist, und/oder
wobei die in dem Schritt a) erhaltene Fraktion (A) eine Schmelzflussrate von 7,5 bis 75 g/10 min und vorzugsweise von 10 bis 50 g/10 min aufweist.

11. Artikel, der eine Polyethylen-Zusammensetzung gemäß einem der Ansprüche 1 bis 10 aufweist.

12. Artikel nach Anspruch 11, der ein Rohr oder ein Anschlussstück ist.

13. Rohr nach Anspruch 12,

wobei das Rohr eine Spannungsrissbeständigkeit, gemessen durch einen Rohrkerbtest, von mehr als 500 Stunden aufweist, und/oder
wobei das Rohr eine kritische Temperatur Tc von -15°C oder tiefer aufweist.

14. Verwendung einer Polyethylen-Zusammensetzung gemäß einem der Ansprüche 1 bis 10 für das Erzeugen eines Artikels.

15. Verwendung einer Polyethylen-Zusammensetzung gemäß einem der Ansprüche 1 bis 10 für das Verbessern des Druckwiderstands eines Rohrs oder Anschlussstücks bei einer Temperatur von 30°C oder mehr zu mehr als 10 MPa.

**Revendications**

1. Composition de polyéthylène comprenant une résine de base qui comprend

(A) une première fraction d'homo- ou de copolymère d'éthylène ayant un indice de fluidité à chaud MFR2 de 1 à 150 g/10 min et
(B) une deuxième fraction de copolymère d'éthylène ayant une teneur en unités dérivées d'un comonomère de 0,30 à 1,00 % en moles,
dans laquelle la fraction (A) a un poids moléculaire inférieur à celui de la fraction (B) et dans laquelle la fraction (B) est présente en une quantité de 45 à 70 % en poids par rapport au poids total de la résine de base ;
dans laquelle la composition de polyéthylène a un indice de fluidité à chaud $MFR_5$ de 0,10 à 0,35 g/10 min ; et
dans laquelle la composition de polyéthylène a un module d'écrouissage de 50 à 150 MPa.

2. Composition de polyéthylène selon la revendication 1,
dans laquelle la résine de base présente au moins l'une des caractéristiques suivantes :

une distribution de masse moléculaire, c'est-à-dire le rapport Mw/Mn, de 10 à 25;
un indice de polydispersité (IP) de 1,2 à 3,0 $Pa^{-1}$ ;
une viscosité à une contrainte de cisaillement de 747 Pa ($\hat{e}ta_{747}$) de 200 à 800 kPa*s ; et
une densité dans la plage de 940 à 957 $kg/m^3$.

**3.** Composition de polyéthylène selon l'une quelconque des revendications précédentes,

dans laquelle, dans la fraction (B), les unités dérivées d'un comonomère sont des unités dérivées d'au moins un comonomère d'alpha-oléfine ; et/ou
dans laquelle la résine de base a une teneur en unités dérivées du comonomère ne dépassant pas 0,6 % en moles par rapport à la résine de base.

**4.** Composition de polyéthylène selon l'une quelconque des revendications précédentes,

dans laquelle la fraction (A) est un homopolymère d'éthylène ; et/ou
dans laquelle la fraction (A) a un indice de fluidité à chaud MFR2 de 7,5 à 75 g/10 min.

**5.** Composition de polyéthylène selon l'une quelconque des revendications précédentes,

dans laquelle la résine de base a été produite dans un procédé en plusieurs étapes ; ou
dans laquelle la résine de base a été produite dans un procédé en plusieurs étapes en présence d'un catalyseur Ziegler-Natta.

**6.** Composition de polyéthylène selon l'une quelconque des revendications précédentes,
dans laquelle la résine de base a une masse moléculaire moyenne, Mn, dans la plage de 9 000 à 20 000 g/mol.

**7.** Composition de polyéthylène selon l'une quelconque des revendications précédentes,
dans laquelle la composition de polyéthylène présente au moins l'une des caractéristiques suivantes :

un module d'écrouissage de 55 à 100 MPa ; une contrainte à la limite d'élasticité à 80 °C de 6,5 à 7,5 MPa ;
un temps de défaillance dans l'essai de résistance à la pression à court terme (STPR) à un niveau de contrainte de 5,9 MPa à 80 °C d'au moins 700 h ; et
un temps de défaillance dans l'essai de résistance à la pression à court terme (STPR) à un niveau de contrainte de 6,2 MPa à 80 °C d'au moins 70 h ; et/ou
dans laquelle la composition de polyéthylène répond à l'inéquation suivante :

$$\text{contrainte à la limite d'élasticité à 80 °C} > 9,58 - 0,92 * \log (NPT).$$

**8.** Composition de polyéthylène pouvant être obtenue par un procédé en plusieurs étapes, le procédé en plusieurs étapes comprenant les étapes suivantes :

a) la polymérisation d'éthylène en présence

- d'un catalyseur,
- dans un ou plusieurs réacteurs à boucle en présence d'un composé d'alkylaluminium et d'un agent de transfert de chaîne pour obtenir la fraction (A), la fraction (A) ayant un indice de fluidité à chaud MFR2 de 1 à 150 g/10 min ; et

b) le transfert de la fraction (A) dans un réacteur en phase gazeuse

- l'introduction d'éthylène et de comonomère dans le réacteur en phase gazeuse,
- la polymérisation supplémentaire pour obtenir une résine de base comprenant la fraction (A) obtenue à l'étape a) et la fraction (B) obtenue à l'étape b),

dans laquelle la fraction (B) a une teneur en unités dérivées du comonomère de 0,30 à 1,00 % en moles et dans laquelle la fraction (B) est présente en une quantité de 45 à 70 % en poids par rapport au poids total de la résine de base ;
c) l'extrusion de la résine de base en une composition de polyéthylène ayant un indice de fluidité à chaud MFR5 de 0,10 à 0,35 g/10 min ; la composition de polyéthylène ayant un module d'écrouissage de 50 à 150 MPa.

**9.** Composition de polyéthylène selon la revendication 8,
dans laquelle le procédé comprend une étape de prépolymérisation avant l'étape a).

**10.** Composition de polyéthylène selon l'une quelconque des revendications 8 et 9,

dans laquelle le catalyseur de polymérisation est un catalyseur Ziegler-Natta ; et/ou
dans laquelle la fraction (A) obtenue à l'étape a) a un indice de fluidité à chaud de 7,5 à 75 g/10 min et plus préférentiellement de 10 à 50 g/10 min.

**11.** Article comprenant une composition de polyéthylène selon l'une quelconque des revendications 1 à 10.

**12.** Article selon la revendication 11, qui est un tuyau ou un raccord.

**13.** Tuyau selon la revendication 12,

dans lequel le tuyau présente une résistance à la fissuration sous contrainte mesurée par le test du tuyau entaillé de plus de 500 heures ; et/ou
dans lequel le tuyau a une température critique, Tc, de -15 °C ou moins.

**14.** Utilisation d'une composition de polyéthylène selon l'une quelconque des revendications 1 à 10 pour la production d'un article.

**15.** Utilisation d'une composition de polyéthylène selon l'une quelconque des revendications 1 à 10 pour améliorer la résistance à la pression à une température de 30 °C ou plus à plus de 10 MPa d'un tuyau ou d'un raccord.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0022040 A
- EP 1985660 A1
- EP 1655337 A1
- EP 1146079 A
- EP 2583998 A1
- US 4582816 A
- US 3405109 A
- US 3324093 A
- EP 479186 A
- US 5391654 A
- WO 9212182 A1
- WO 9618662 A1
- WO 2010054732 A
- WO 2006063771 A1
- EP 428054 A1
- EP 1378528 A1
- EP 688794 A
- WO 9951646 A
- WO 0155230 A
- WO 2005118655 A
- EP 810235 A
- WO 2014096296 A
- WO 2016097193 A
- EP 1378528 A
- WO 2016124676 A

**Non-patent literature cited in the description**

- **SCHEIRS ; BOHM ; BOOT ; LEEVERS.** PE100 Resins for Pipe Applications. *TRIP,* 1996, vol. 4 (12), 408-415
- *Encyclopedia of Polymer Science and Engineering,* vol. 14, 492-509
- **KLIMKE, K. ; PARKINSON, M ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **CASTIGNOLLES, P. ; GRAF, R. ; PARKINSON, M. ; WILHELM, M. ; GABORIEAU, M.** *Polymer,* 2009, vol. 50, 237
- **POLLARD, M. ; KLIMKE, K. ; GRAF, R. ; SPIESS, H.W. ; WILHELM, M ; SPERBER, O. ; PIEL, C. ; KAMINSKY, W.** *Macromolecules,* 2004, vol. 37, 813
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C ; BROWN, S.P.** *Mag. Res. in Chem.,* 2007, vol. 45 (S1), S198
- *J. Randall, Macromol. Sci., Rev. Macromol. Chem. Phys.,* 1989, vol. C29, 201